# EUROPÄISCHE PATENTSCHRIFT

(11) **EP 1 436 347 B1**
(45) Veröffentlichungstag und Bekanntmachung des Hinweises auf die Patenterteilung: **29.11.2006**
(21) Anmeldenummer: 02754992.2
(22) Anmeldetag: 10.08.2002
(51) Int. Cl.: C08J 9/12

(54) **VERFAHREN ZUR HERSTELLUNG VON EXTRUDIERTEN OFFENZELLIGEN SCHAUMSTOFFPLATTEN**
METHOD FOR PRODUCING EXTRUDED OPEN-CELL FOAM PLATES
PROCEDE POUR PRODUIRE PAR EXTRUSION DES PLAQUES DE MOUSSE A ALVEOLES OUVERTES

(30) Priorität: 25.08.2001 DE 10141778
(43) Veröffentlichungstag der Anmeldung: 14.07.2004
(73) Patentinhaber: BASF Aktiengesellschaft, 67056 Ludwigshafen (DE)
(72) Erfinder: DIETZEN, Franz-Josef, 67454 Hassloch (DE); EHRMANN, Gerd, 67146 Deidesheim (DE); HAHN, Klaus, 67281 Kirchheim (DE); SCHÄFER, Harald, 68199 Mannheim (DE)
(86) Internationale Anmeldenummer: PCT/EP2002/008990
(87) Internationale Veröffentlichungsnummer: WO 2003/018678

(56) Entgegenhaltungen:
- US-A- 5 244 927
- US-A- 5 340 844
- US-A- 5 674 916
- PATENT ABSTRACTS OF JAPAN vol. 2000, no. 16, 8. Mai 2001 (2001-05-08) & JP 2001 002821 A (SEKISUI PLASTICS CO LTD), 9. Januar 2001 (2001-01-09)

## Beschreibung

Die Erfindung betrifft ein Verfahren zur Herstellung von offenzelligen Schaumstoffplatten durch Extrusion einer Styrolpolymerisat-Schmelze zusammen mit einem flüchtigen Treibmittel.

Offenzellige Polystyrol-Schaumstoffplatten eignen sich in hervorragender Weise zur Schalldämmung. Es ist bekannt, daß Offenzelligkeit durch zwei Maßnahmen erreicht werden kann: durch Erhöhung der Temperatur der Polystyrolschmelze an der Extruderdüse und/oder durch Zumischen von mit Polystyrol unverträglichen Fremdpolymeren.

So beschreibt die WO 96/00258 die Herstellung von Polystyrol-Schaumstoffen mit einer Offenzelligkeit von 30 bis 80 % durch Extrusion einer Polystyrol-Schmelze zusammen mit einem flüchtigen Treibmittel bei einer Schäumtemperatur, die um 3 bis 15°C höher liegt als bei der Herstellung entsprechender geschlossenzelliger Schaumstoffe. Als Treibmittel können eine Vielzahl anorganischer oder organischer flüchtiger Verbindungen eingesetzt werden, unter denen auch CO₂ und Wasser genannt.sind. Bevorzugt sind Mischungen aus CO₂ und Ethylchlorid und/oder Monochlordifluorethan. Halogenkohlenwasserstoffe haben jedoch den Nachteil, daß sie weichmachend auf Polystyrol wirken und keine hohe Offenzelligkeit zulassen. Außerdem können sie zu Umweltproblemen führen.

Die WO 36/34038 beschreibt extrudierte offenzellige PolystyrolSchaumstoffe mit einer mittleren Zellgröße von 70 µm oder weniger, die evakuiert und als Vakuumisoliermaterial eingesetzt werden können. Hier werden wiederum die gleichen Treibmittel wie in der oben genannten Druckschrift eingesetzt. Derartige mikrozelluläre Schäume zeigen jedoch keine gute Schallabsorption.

Die WO 98/58991 und WO 99/47592 beschreiben die Herstellung von offenzelligen Polystyrol-Schaumstoffen durch Schaumextrusion von Mischungen von Polystyrol mit Ethylenpolymeren, wobei als Treibmittel wiederum die oben genannten eingesetzt werden.

Nach DE-A 100 05 873 wird die Zellöffnung durch Zusatz von Polymethylmethacrylat zu Polystyrol bewirkt. Durch das Zumischen von Fremdpolymeren werden jedoch die mechanischen Eigenschaften der Schaumstoffe - meist negativ - beeinflußt.

Der Erfindung lag daher die Aufgabe zugrunde, ein Verfahren zur Herstellung von offenzelligen Polystyrol-Schaumstoffplatten mit hervorragender Schallabsorption und guten mechanischen Eigenschaften bereitzustellen, das ohne Zusatz von Fremdpolymeren zu dem Styrolpolymerisat auskommt.

Es wurde nun überraschenderweise gefunden, daß bei Verwendung einer Treibmittelmischung aus CO₂ und Wasser das Wasser ebenfalls zellöffnend wirkt, so daß auf den Zusatz von Fremdpolymeren verzichtet werden kann.

Gegenstand der Erfindung ist demzufolge ein Verfahren zur Herstellung von Schaumstoffplatten mit einer Offenzelligkeit von mehr als 80 % und einer mittleren Zellgröße von mehr als 100 µm auf Basis von Styrolpolymerisaten durch Extrusion einer Polymerschmelze, welche ausschließlich das Styrolpolymerisat als Polymer enthält, zusammen mit 2 bis 12 Gew.-%, bezogen auf das Styrolpolymerisat, einer Treibmittelmischung aus CO₂ und Wasser im Gewichtsverhältnis 80:20 bis 20:80 und 1 bis 10 Gew.-%, bezogen auf das Styrolpolymerisat, Graphitpulver, bei erhöhten Temperaturen.

Styrolpolymerisate im Sinne dieser Erfindung sind Polystyrol und Mischpolymerisate des Styrols, die mindestens 80 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol. Maleinsäureanhydrid oder auch geringe Mengen an Verbindungen, die zwei polymerisierbare Doppelverbindungen enthalten wie Butadien, Divinylbenzol oder Butandioldiacrylat. Bevorzugt ist Polystyrol.

Die erfindungsgemäßen Schaumstoffplatten sind vorzugsweise mehr als 15 mm und insbesondere 20 bis 100 mm dick. Ihr Querschnitt beträgt vorzugsweise 100 bis 1000 cm². Die Dichte der Schaumstoffplatten beträgt vorzugsweise 20 bis 100 g•1⁻¹. Sie weisen erfindungsgemäß eine Offenzelligkeit von mehr als 80 %, vorzugsweise von mehr als 90 %, und insbesondere von mindestens 95 %, auf, gemessen nach DIN ISO 4590.

Die mittlere Zellgröße beträgt mehr als 100 µm, vorzugsweise liegt sie zwischen 120 und 500 µm. Ist die Offenzelligkeit zu gering oder die Zellgröße zu klein, dann leidet die Fähigkeit der Schaumstoffplatten, den Schall zu absorbieren.

Die Herstellung der Schaumstoffplatten erfolgt in an sich bekannter Weise durch Extrusion. In einem Extruder wird die durch Erwärmen plastifizierte Thermoplastmatrix mit dem Treibmittel oder Treibmittelgemisch und gegebenenfalls weiteren Zusatzstoffen innig vermischt. Das Gemisch durchläuft sodann eine Beruhigungszone, in der es unter ständigem Rühren auf eine Temperatur zwischen etwa 125 und 140°C gekühlt und anschließend durch eine Düse zu Platten extrudiert wird.

Die Temperatur der Schmelze an der Düse sollte dabei um etwa 5 bis 15°C höher sein als bei der Herstellung entsprechender geschlossenzelliger Schaumstoffplatten.

Als übliche Zusatz- und/oder Hilfsstoffe können der Thermoplastmatrix Stabilisatoren, Farbstoffe, Füllstoffe, Flammschutzmittel und/oder Keimbildner in üblichen Mengen zugesetzt werden. Es werden 1 bis 10 Gew.-ö, bezogen auf das Styrolpolymerisat, Graphitpulver eingesetzt, wodurch die Offenzelligkeit noch weiter erhöht wird.

Erfindungsgemäß wird als Treibmittel eine Mischung aus CO₂ und Wasser im Gewichtsverhältnis 80:20 bis 20:80, vorzugsweise 70:30 bis 40:60 eingesetzt, und zwar in Mengen von 2 bis 12 Gew.-%, insbesondere von 3 bis 8 Gew.-%, bezogen auf das Styrolpolymerisat.

Die erfindungsgemäß hergestellten Schaumstoffplatten werden mit besonderem Vorteil im Bauwesen zur Schallisolierung eingesetzt werden. Sie können jedoch auch zur Wärmedämmung oder zur Herstellung von Vakuumpanels verwendet werden.

### Beispiel:

Die Schaumstoffproben wurden auf einer Tandemanlage extrudiert. Diese bestand aus einem Aufschmelzextruder und einem Kühlextruder. Polystyrol (MW 240 000) wurde zusammen mit 1 % Graphit (Typ UF2 96-97; mittlere Teilchengröße 4 µm; der Firma Graphitwerk Kropfmühl) dem ersten Extruder zugeführt. Das Polymer wurde aufgeschmolzen und eine Treibmittelmischung aus 2 % CO₂ und 1,8 % Wasser, jeweils bezogen auf Polystyrol, wurde eingespritzt und dann in die Schmelze eingemischt. Die treibmittelhaltige Schmelze wurde dann im zweiten Extruder auf die zum Schäumen notwendige Temperatur von 133°C abgekühlt. Nach dem Austritt aus einer Schlitzdüse schäumte die Schmelze auf und wurde in einer Kalibriervorrichtung zu Platten geformt.

Die so erhaltene Platte (Dichte 39 g/l, Offenzelligkeit 95 %, mittlere Zellgröße 150 µm) wurde in der Mitte durchgesägt und die Schallabsorption nach DIN 52215 wurde an der sägerauhen Seite gemessen.

Die nachfolgende Tabelle zeigt die gemessenen Schallabasorptionswerte:

| Frequenz | Schallabsorptionsgrad |
|---|---|
| (Hz) | (%) |
| 800 | 19,7 |
| 1000 | 28,8 |
| 1250 | 39,1 |
| 1600 | 50,0 |
| 2000 | 60,5 |
| 2500 | 69,4 |
| 3150 | 75,9 |
| 4000 | 79,9 |

## Patentansprüche

1. Verfahren zur Herstellung von Schaumstoffplatten mit einer mittleren Zellgröße von mehr als 100 µm auf Basis von Styrolpolymerisaten durch Extrusion einer Polymerschmelze, welche ausschließlich das Styrolpolymerisat als Polymer enthält, zusammen mit 2 bis 12 Gew.-%, bezogen auf das Styrolpolymerisat, eines Treibmittelgemisches aus CO₂ und Wasser im Gewichtsverhältnis 80:20 bis 20:80, sowie üblichen Zusatzstoffen bei erhöhten Temperaturen,**dadurch gekennzeichnet, dass** die Extrusion in Gegenwart von 1 bis 10 Gew.-% Graphitpulver, bezogen auf das Styrolpolymerisat, durchgeführt wird, und dass die Schaumstoffplatten eine Offenzelligkeit von mehr als 80 % aufweisen.

2. Verfahren nach Anspruch 1, **dadurch gekennzeichnet, daß** das Styrolpolymerisat Polystyrol ist.

3. Verwendung der nach Anspruch 1 hergestellten Schaumstoffplatten im Bauwesen zur Schallisolierung.

## Claims

1. A process for producing foam sheets with an average cell size of more than 100 µm, based on styrene polymers, by extruding a polymer melt in which the styrene polymer is the only polymer present, together with from 2 to 12% by weight, based on the styrene polymer, of a blowing agent mixture made from CO₂ and water in a weight ratio of from 80:20 to 20:80, and also with conventional additives, at elevated temperatures, which comprises extrusion in the presence of from 1 to 10% by weight of graphite powder, based on the styrene polymer, the open-cell percentage of the foam sheets being more than 80%.

2. The process according to claim 1, wherein the styrene polymer is polystyrene.

3. The use of the foam sheets produced according to claim 1 for sound-deadening in the construction industry.

## Revendications

1. Procédé de production de plaques de mousses d'une taille moyenne d'alvéoles de plus de 100 µm, à base de polymères de styrène, par extrusion d'une masse fondue de polymère, contenant exclusivement le polymère de styrène en tant que polymère, en même temps que de 2 à 12% en poids, par rapport au polymère de styrène, d'un mélange d'agents gonflants à base de CO₂ et d'eau en proportion pondérale de 80 : 20 à 20 : 80, ainsi que des additifs usuels, à température élevée, **caractérisé en ce que** l'extrusion est entreprise en présence de 1 à 10% en poids de graphite en poudre, par rapport au polymère de styrène, et que les plaques de mousse présentent un taux d'alvéoles ouvertes de plus de 80%.

2. Procédé selon la revendication 1, **caractérisé en ce que** le polymère de styrène est du polystyrène.

3. Utilisation des plaques de mousse préparées selon la revendication 1 dans la construction, pour l'isolation acoustique.
